# EUROPÄISCHE PATENTSCHRIFT

(11) **EP 1 316 651 B1**
(45) Veröffentlichungstag und Bekanntmachung des Hinweises auf die Patenterteilung: **18.01.2012**
(21) Anmeldenummer: 03005183.3
(22) Anmeldetag: 01.04.2000
(51) Int. Cl.: A47C 7/02, A47C 7/46, A47C 31/12

(54) **Bauteil zur Aufnahme von Kräften, mit einer flexiblen Aussenhaut und seine Verwendung**
Load-carrying element with flexible outer skin and its use
Elément de support de charges avec enveloppe extérieure souple et son usage

(30) Priorität: 01.04.1999 DE 19916411
(43) Veröffentlichungstag der Anmeldung: 04.06.2003
(62) Teilanmeldung aus: 00250109.6
(73) Patentinhaber: Kniese, Leif, 14129 Berlin (DE)
(72) Erfinder: Kniese, Leif, 14129 Berlin (DE)
(74) Vertreter: Grünecker, Kinkeldey, Stockmair & Schwanhäusser

(56) Entgegenhaltungen:
- EP-A- 0 860 355
- WO-A-99/08570
- AU-A- 6 563 380
- DE-A- 4 432 656
- DE-C- 4 121 768
- FR-A- 2 715 124
- FR-A1- 2 266 805
- LU-A- 88 528
- BEITZ W, KÜTTNER K-H: "Dubbel: Taschenbuch für den Maschinenbau (17. Auflage)" 1990 , SPRINGER-VERLAG , BERLIN, DE XP002203654 * Seite C8, Spalte 2, Absatz 2.4.1 - Seite C11, Spalte 2, Absatz 2.4.2; Tabelle 1 *

## Beschreibung

Die Erfindung betrifft ein Bauteil zur Abstützung einer von einem festen Körper ausgeübten Kraft.

Aus der EP 0 860 355 A1 ist ein aerodynamisches Bauteil für Flugzeugkonstriktionen bekannt, das in der Lage ist, seinen Querschnitt zu verändern und so das Gesamtprofil des aerodynamischen Bauteils zu beeinflussen. Hierbei kommt es nur auf die veränderbare aerodynamische Ausgestaltung der Vorrichtung an. Diese muss den Gesetzen des Leichtbaus folgen. Aktuatoren müssen das Profil in den engen Grenzen der Aerodynamik über Streben verstellen und in einer vorherbestimmten Position fixieren, um ein strömungsgünstiges Profil zu gewährleisten.

Ein Profil zur Erzeugung von Auftrieb ist aus der AU 65633/80 A1, die als nächtsliegender Stand der Technik gesehen wird, bekannt. Das Profil kann als Finne, Kiel, Stabilisator oder Ruder bei einer Anwendung in Wasser und, bei einer Anwendung in Luft, als Flügel, Seitenleitwerk, Ruder oder Stabilisator benutzt werden. Eine Tragestruktur ist von einer flexiblen Hülle umgeben. Bei einer Änderung des Anströmwinkels ändert sich das Profil und erzeugt Auftrieb.

Die LU 88528 A1 befasst sich mit einem variablen hydrodynamischen Profil, wie beispielsweise einem Segelprofil, das durch Drehen des Mastes verstellt werden kann.

Bei der EP 0 453 713 A1 handelt es sich ebenfalls um ein aerodynamisches Bauteil, das aus einem vorderen, einem mittleren und hinteren Segment zusammengesetzt ist und über eine Achse senkrecht zur Skelettlinie des Flügels miteinander verbunden ist. Über diese Achse lässt sich das Profil des Flügels verändern.

Aus der DE 44 11 610 A1 ist ein Flossenantrieb bekannt, der eine tragflügelförmige Profilform aufweist und umkehrbar flexibel ausgebildet ist. Dies wird durch ein Federflächenblatt erreicht, bei dem eine jeweils entgegen der Bewegungsrichtung der Flosse gekrümmt ist.

Die WO 99/08570 A2 befasst sich mit einem Formkörper, dessen Eigenvolumenform mindestens eine integrierte Wölbung aufweist. Die Eigenvolumenform ist durch ein Wirkelement, beispielsweise in Form eines flexiblen Zugbandes, veränderbar.

Aufgabe der vorliegenden Erfindung ist es, ein gemäss dem Anspruch 1 definiertes Bauteil zu schaffen, das flexibel ist, jedoch in sich ein stabiles System darstellt und das auf Druckeinwirkung impulsumwandelnd reagiert.

Anspruch 17 betrifft eine Verwerdung des Bauteils gemäß der Ansprüche 1 bis 16.

Gelöst wird diese Aufgabe durch ein Gerüst umfassend zwei flexible, keilförmig aufeinanderzulaufende Außenwangen und an der Innenseite der Außenwangen anscharnierte Streben, die über die Außenwangen miteinander verbunden sind und in gegenseitiger Wirkverbindung stehen, so dass das Gerüst bei einer belasteten Außenwange unter Wirkung der Kraft gegen die Kraftrichtung ausgelenkt ist, wobei die Außenwangen im entspannten Zustand des Bauteils gradllinig, konkav oder konvex/konkav (S-förmig) ausgebildet sind.

Bei Druck auf die Außenhaut des erfindungsgemäßen Bauteils gibt der Teil mit der höchsten Auflastdichte nach; gleichzeitig werden das stumpfe und das spitze Ende entgegen der

Druckrichtung ausgelenkt. Es entsteht eine Mulde, wobei das spitze Ende und das stumpfe Ende des Gerüstes eine der Druckrichtung entgegengesetzte Bewegung ausführen.

Die Streben werden dabei indirekt über die eingeleitete Kraft auf die Außenhaut verstellt oder über die Achse eingeleitet. Um den Effekt noch zu vergrößern, ist ein Hebel vorgesehen, der direkt an einer der Streben angelenkt wird und für die Momentabstützung fest mit der Achswelle verbunden ist. Dadurch wird zusätzlich auch eine Kraft von der Strebe auf Die Außenhaut eingeleitet und nicht ausschließlich über die Außenhaut auf die Streben. Durch die Formgebung der Außenhaut und der Anordnung der Streben die ein Gerüst bilden wird ein Drehmoment in die Achswelle eingeleitet wird die Außenhaut entgegen der Bewegungsrichtung ausgelenkt.

Durch die Streben wird die flexible aber formhaltige Unter- und Oberseite der Außenhaut, die zusammen eine einstückige Einheit ergeben, jeweils in die entgegengesetzte Richtung ausgelenkt. Dies ist auch der Fall, wenn ein Drehmoment über die Achswelle am stumpfen Ende auf das Bauteil übertragen wird. Dieser Effekt wird noch durch einen angelenkten Hebel, der mit einer der Streben in direkter Wirkverbindung steht, verstärkt. Ein Verstellen der Streben und damit auch ein Verändern der Form der Außenhaut, kann auch durch Servomotoren geschehen, die Diagonal zwischen dem unteren und oberen Ende der Streben angeordnet sind.

Derartige Bauteile können auch in Stuhllehnen und Sitzflächen verbaut werden. Durch die Kombination von zwei Gerüsten, die am stumpfen Ende über einer gemeinsamen Achswelle miteinander verbunden sind, entsteht ein Stuhl und/oder Sessel der in der Lage ist eine Person aufzunehmen und sich der Anatomie der Person anzupassen.

Auch der Einsatz als Hubgabeln in Gabelstapler ist denkbar, ebenso die Verwendung als Höhenruder, beispielsweise in Luftschiffen. Auch ergibt sich die Möglichkeit die Vorrichtung beispielsweise als Flosse für Sport- und Berufstaucher einzusetzen. Bei einer derartigen Ausführung ist keine Achswelle vorgesehen. Hierbei werden mehrere parallel angeordnete Gitter mit dem stumpfen Ende am Schuh der Flosse einstückig angeformt. Die beabstandeten Gitter werden über eine membraneartig ausgebildetes Elastomer verbunden.

Aufgrund der vergleichbaren Auswirkungen eines Hebels auf flüssige und gasförmige Stoffe, kommen folgende Betrachtungen für beide Stoffe gemeinsam in Betracht. Ist daher im Folgenden von Wasser die Rede, so gilt die Betrachtungsweise in gleichem Maße auch für Gase und umgekehrt.

Bei einer Flosse, die im Wasser bewegt wird, kann nur soviel Kraft übertragen und in Vorschub umgewandelt werden, wie die Schaufelkonstruktion, bzw. Schaufelmaterial, aufnehmen kann. Wird diese Kraft überstiegen, wandelt sich ein Teil der geleisteten Arbeit nur in Verformung der Konstruktion bzw. des Materials um oder ruft im Wasser Wirbel hervor, die Energie verbrauchen, die nicht zur Vortriebsenergie umgewandelt werden kann.

Der Endpunkt einer Flosse schwenkt dieser bei der Auf- und Abwärtsbewegung des Fußes hinterher. Dabei geht ein Teil der aufgewendeten Energie an die Umgebung verloren. Dieses Hinterhergleiten wird bei einigen Flossen zum zeitverzögerten Vorschub umgewandelt

Bisherige Ausführungen versuchen diesen Mangel dadurch auszugleichen, daß sie den Bewegungsablauf in eine wasserverdrängende Vorverformung und eine anschließende aus der Verformung hergeleiteten Schubbewegung umwandeln, indem sie sich an der bewegten Wassermenge mit Hilfe der Federwirkung des Flossenblattes abstoßen. Durch diese Verzögerung wird aber bereits Wasser bewegt, welches nicht mehr zum Vorschub zur Verfügung steht.

Auch hier findet, wie oben unter den festen Stoffen beschrieben, lediglich eine Winkeländerung statt. Die Flosse die an sich das Bestreben hat gerade zu sein, wird bei einem nach unten gerichteten Tritt um den trägen Wasserkörper gebogen, wobei die Hinterkante tendenziell das Bestreben hat, sich der Verformung zu entziehen. Daraus ergibt sich ein Druck auf das darüberliegende ruhige Wasser , das entgegen der Vorschubrichtung bewegt wird und wiederum Energieverluste erzeugt.

Wenn man den Keil bei einer fortlaufenden Hin- und Herbewegung betrachtet, der zwischen der gebogenen Schaufel und der gedachten Linie entsteht, die sich ergibt, wenn der Flosse kein Druck entgegenstehen würde (Hebelachse), zeigt sich, daß die Flosse auf die im Keil befindliche Masse keine Energie mehr ausüben kann, da sie sich an ihrem Wendepunkt befindet und in die andere Richtung zu verformen beginnt. Diese Masse kann folglich nicht mehr zur Energienutzung verwendet werden.

Die Teilchen auf der druckabgewandten Seite, die durch den entstehenden Unterdruck hinterhergezogen werden, heben einen Teil des oben beschriebenen Energieverlustes wieder auf, indem sie die Flosse, obwohl schon Gegendruck ausgeübt wird, noch weiter in den Keilbereich hineinschieben, können diesen Verlust allerdings nicht vollständig ausgleichen.

Zusätzlich ergibt sich durch die Verformung eine Verkleinerung der Wirkungsfläche infolge der durch die Verformung entstehenden Verkürzung im Verhältnis zur Wirkungsebene (Hebelachse). Bei einem starren Hebel würde zwar keine Verkürzung eintreten, allerdings treten mangels Elastizität vermehrte Wirbel auf.

Um Nachteile der bekannten Kraftübertragungshebel zu beseitigen, wird.bei der Erfindung ein Übertragungshebel auf physikalische Körper durch Erzielung eines höheren Wirkungsgrades und der damit verbundenen größeren Kraftübertragung, auch von Antriebsmaschinen ermöglicht. Das Bauteil ist in der Lage, eine lokale Systemverformung, die aus einer Impulseinwirkung entsteht, zeitgleich durch eine Verformung des Systems an anderer Stelle in gleicher Stärke in Richtung des Ursprungsimpulses synchron dynamisch entgegen zusetzen und auszugleichen.

Erfindungsgemäß wird durch eine aus dem Druck resultierende Verformung bewirkt. Dabei weicht das Bauteil nicht dem Druck aus, sondern stellt sich ihm entgegen und leitet ihn in das System. Durch diese Maßnahmen ist es folglich möglich, zwei Punkte elastisch miteinander zu verbinden, ohne daß diese sich am gegenüberliegenden Ende befinden bzw. durch eine Haltevorrichtung miteinander verbunden sein müssen. Ebenso können diese Endpunkte trotz einer aus Druckausübung resultierenden Verformung auf einer Achse bleiben.

Dadurch wird sowohl die Kraftübertragung maximiert und ein Entweichen bei festen Stoffen verhindert, als auch der Energieverlust durch Verwirbelungen verkleinert.

Weitere vorteilhafte Maßnahmen sind in den Unteransprüchen beschrieben. Die Erfindung ist in der beiliegenden Zeichnung dargestellt und wird nachfolgend näher beschrieben; es zeigt:
- **Figur 1**: Darstellung einer Hubgabel mit einer zy- lindrischen Auflast und die Verformung der Hubgabel beim Anheben der Auflast und deren dynamisches Verhalten,

- **Figur 2**: Darstellung des erfindungsgemäßen Bau- teils und die dynamische Reaktion beim Heben einer zylindrischen Auflast,
- **Figur 3a-c**: den Bewegungsablauf und die Verformung einer herkömmlichen Flosse im Wasser und die Verkürzung der wirksamen Länge des Flosse,
- **Figur 4a-c**: den Bewegungsablauf des erfindungsgemä- ßen Bauteils in einer Ausführungsform als Flosse im Wasser und das konstant halten der wirksamen Länge der Flosse,
- **Figur 5**: Grundskizze des erfindungsgemäßen Bau- teils im ge- und entspannten Zustand,
- **Figur 6a-d**: das erfindungsgemäße Bauteil als Strebe ausgebildet und mit einer elastomeren Membrane verspannt, in parallel Anord- nung, Streben beweglich zueinander ange- ordnet, verspreizt angeordnet und in Sternform angeordnet,

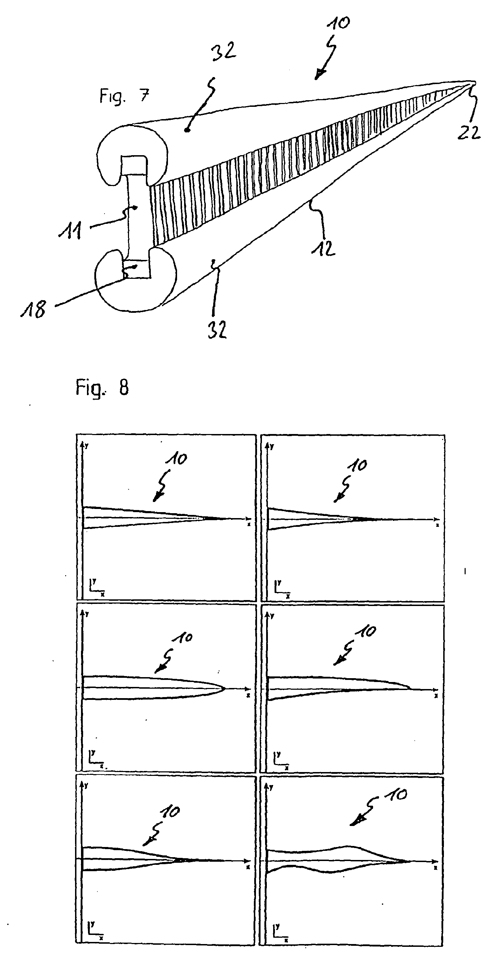

- **Figur 7**: Strebe mit zwei U-förmig ausgebildeten Außenwangen in den die Querstreben an flexiblen Befestigungsmittel gelagert werden,
- **Figur 8a-f**: Darstellung der Seitenansichten von er- findungsgemäßen Bauteilen in ihren ver- schiedenen Ausführungsbeispielen,

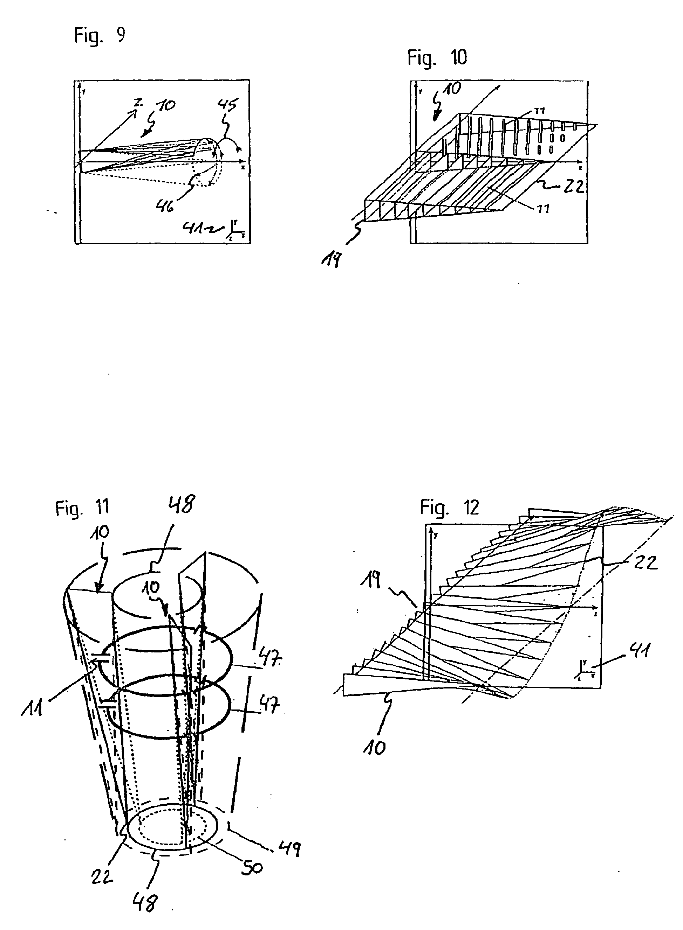

- **Figur 9**: eine kombinierte Auf- und Seitwärtsbewe- gung des Bauteils,
- **Figur 10**: ein zu einer Fläche geschlossenes Bauteil mit seinen unterschiedlichen Distanzhal- tern,
- **Figur 11**: die Bauteile um eine Rohrform gruppiert mit sich verjüngender und verbreitender Stellung und zwei Stabilisationsringen,
- **Figur 12**: eine individuell ansteuerbare Bauteilrei- he, die einen wellenförmigen Bewegungsab- lauf ausführt,

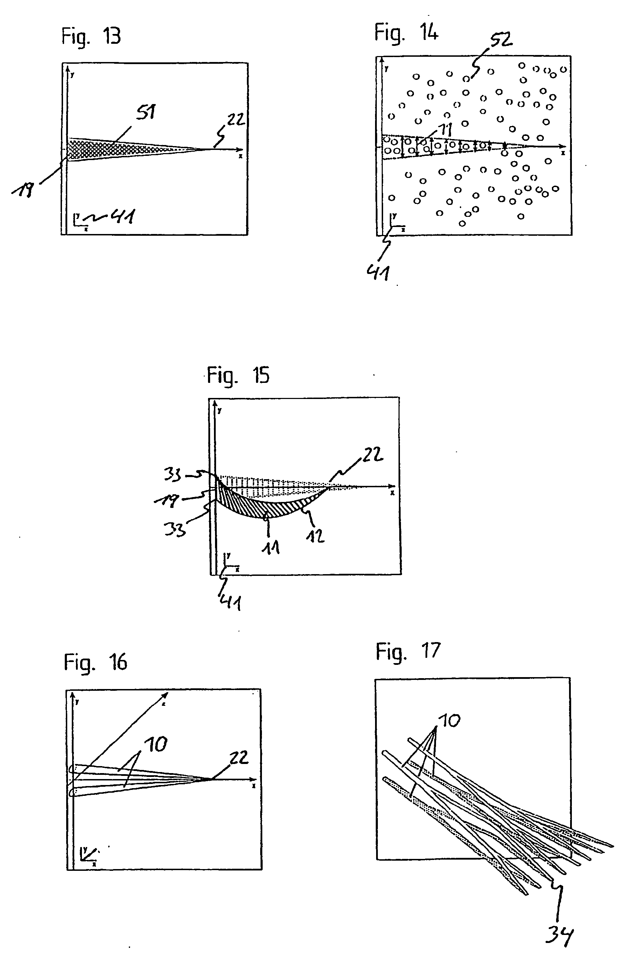

- **Figur 13**: erfindungsgemäßes Bauteil im Querschnitt mit einen Kernteil und der einhüllenden Außenhaut,
- **Figur 14**: lufgefülltes Bauteil mit seinen zugstabi- len Querstreben,
- **Figur 15**: in schematischer Darstellung die Wir- kungsweise und Art der Verformung der Au- ßenhaut und das Auslenken der Querstreben des erfindungsgemäßen Bauteils,
- **Figur 16**: ein Bauteil, bestehend aus einem Wangen- paar das sich in eine Richtung verjüngt,
- **Figur 17**: ein Bauteil, bestehend aus einem Wagen- paar, wobei sich die Enden des Wagenpaa- res auffächern und verjüngen,

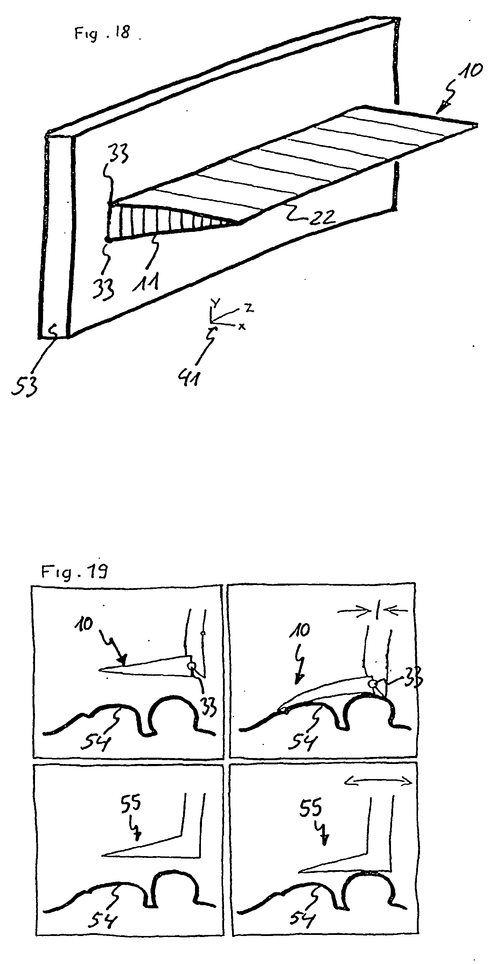

- **Figur 18**: eine Anzahl von Bauteilen nebeneinander zu einem Lattenrost zusammengefügt,
- **Figur 19a-b**: ein Bauteil, daß als Lauffläche eines Fußes für Laufmaschinen ausgebildet ist beim gehen auf unebenen Grund,
- **Figur 19c-d**: Darstellung eines Fußes einer Laufma- schine ohne erfindungsgemäßen Bauteil auf unebenen Grund,

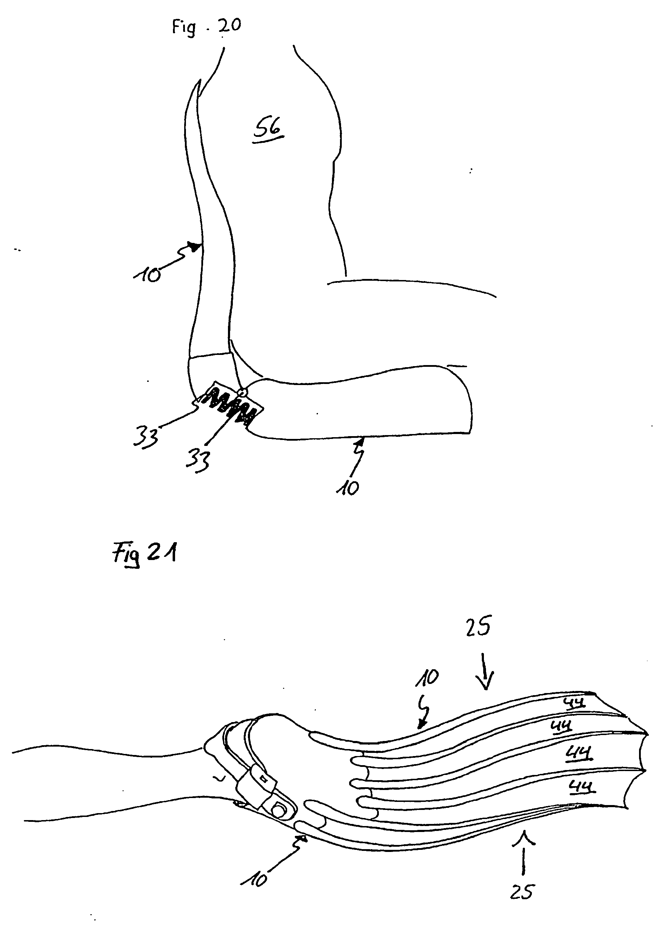

- **Figur 20**: das erfindungsgemäße Bauteil als kon- struktives Element für eine Stuhlrücken- lehne und/oder Sitzfläche,
- **Figur 21**: ein Anwendungsbeispiel als Taucherflosse, in der durch eine elastomere Membrane die erfindunggemäßen Bauteile mit einander verbunden sind,

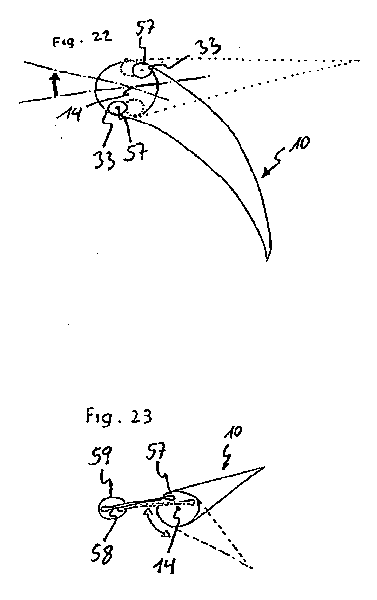

- **Figur 22**: die Ansteuerung eines erfindungsgemäßen Bauteils Achswelle in der zwei weitere Achswellen peripher gelagert sind,
- **Figur 23**: die Ansteuerung eines erfindungsgemäßen Bauteils über eine Achswelle und eine weitere exzentrische Achswelle die von einem Pendelantrieb über eine Schubstange angesteuert wird.
- **Figur 24**: einen Querschnitt durch die erfindungsge- mäße Vorrichtung mit einen aus Streben und Außenhaut aufgebauten Gerüst; ohne Achse und Hebel,
- **Figur 25**: Explosionszeichnung des erfindungsgemäßen Bauteils und den als Vorprofil ausgebil- deten Hebel der an einer Achsewelle befe- stigt ist und mit einer Strebe über ein Befestigungsmittel in Wirkverbindung steht,

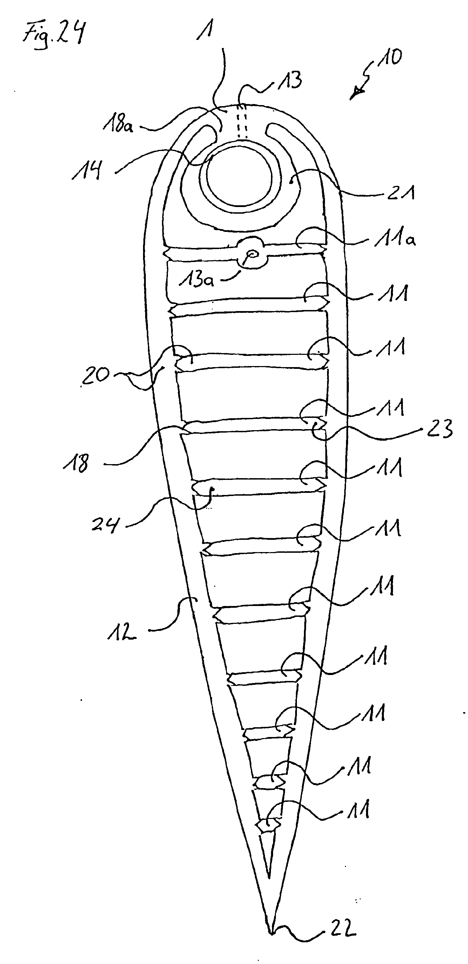

Die in der Figur 24 dargestellte Vorrichtung 10 besteht im wesentlichen aus dem Gerüst 20, das durch die Streben 11, 11a zusammen mit der Außenhaut 12 gebildet wird und ein stumpfes Ende 19 und ein spitzes Ende 22 aufweist. Die Streben 11, 11a sind durch ein elastisches Befestigungsmittel 18 mit der Außenhaut 12 verbunden und regelmäßig parallel zu einander beabstandet. Das Gerüst 20 weist im Bereich des stumpfen Endes 19 ein Ring 22 auf, der tangential der Außenhaut 12 angeformt ist und elastisch mit dieser in Wirkverbindung bringbar ist. Die Strebe 11a weist eine Bohrung 13a auf.

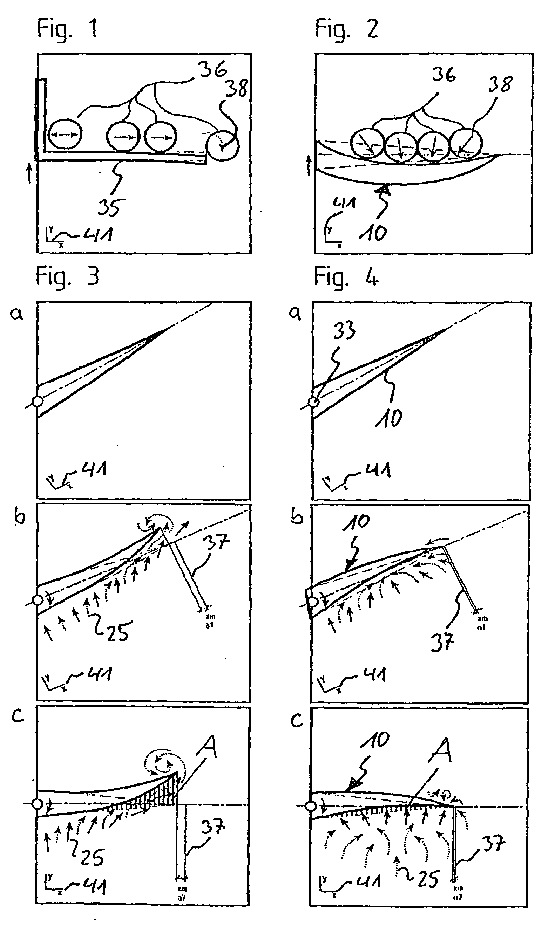

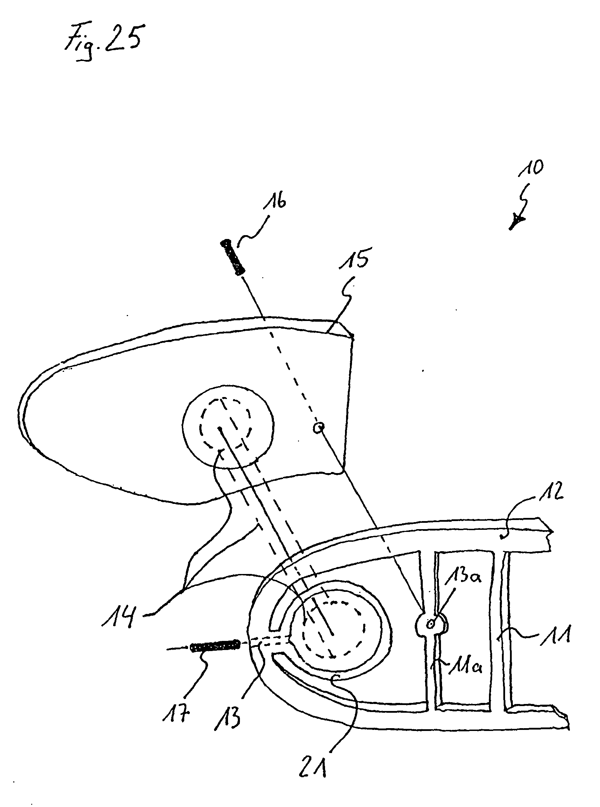

Figur 25 zeigt die Vorrichtung 10, mit im Bereich des stumpfen Ende 19 angebrachten Vorprofil 15 die mit ihrer Bohrung 13 auf der Achswelle 14 aufgeschoben ist und dadurch drehbar gehalten wird. Auf der selben Achse ist das Gerüst 20 durch den angeformten Ring 21 durch einen Bolzen 17 im Scheitelpunkt des stumpfen Endes 19 arretiert. Die Strebe 11a ist über einen Zapfen 16, der durch die Bohrung 13 geführt wird, mit der Nase 15 wirkverbunden. Figur 3 zeigt eine schematische Darstellung der Vorrichtung in entspannter Position und in gespannter Position. Es zeigt weiterhin, daß das stumpfe Ende 19 und das spitze Ende 22 entgegengesetzt der Hauptdruckrichtung 25 ausgelenkt werden. Durch eine, auf die flexible Außenhaut 12, einwirkende Auflast mit der Hauptdruckrichtung 25 werden das obere Ende 23 und das untere Ende 24 der Streben 11, 11a über die flexibelen Befestigungsmittel 18 gegeneinander verschoben und üben so eine Druck- und eine Zugspannung an der Außenhaut 12 aus.

Die Erfindung bezieht sich auf zwei keilförmig zueinander liegende, gelenkige Wangen, die in der Lage sind, durch Impulseinwirkung entstehende lokale Systemverformung zeitgleich durch gleichartige Verformung des Systems an anderer Stelle in Richtung des Ursprungsimpulses auszugleichen. In der Regel wird diese Vorrichtung anwendungsgemäß aus mindestens zwei Querstreben bestehen, die zueinander entweder parallel oder verspreizt verlaufen.

Um das eigentliche Prinzip zu erklären, wird die nachfolgende Darstellung auf eine Strebe reduziert. Erfindungsgemäß kann die Strebe aber auch in beliebiger Zahl und Anordnung, also zum Beispiel parallel zueinander oder in verspreizter Form, angeordnet werden und durch eine Oberhaut verbunden werden (Figur 1).

Eine Strebe besteht aus mindestens zwei in der Regel gleichlangen Wangen, die in einer keilförmigen Grundform an einem Ende zusammenlaufen und dort miteinander verbunden sind. Am anderen, kraftgebenden Ende sind die Wangen in einem anwendungsabhängigen Abstand zueinander befestigt.

Die Wangen können fest mit ihrem kraftgebenden Körper verbunden sein. Es ist aber auch möglich, daß nur eine Wange starr befestigt ist, die andere dagegen in Richtung der Ausdehnung der Strebe verschiebbar ist. Außerdem können beide Wangen mit dem kraftgebenden Körper beweglich verbunden sein. (Figur 2).

Die Ausformung der Wangen selbst kann dabei ebenso variabel sein. Die einzelnen Wangenh können dabei geradlinig, oder zueinander konkav, bzw. "konvex/ konkav" - S- förmig ausgebildet sein, wobei die Steigung wiederum anwendungsabhängig ist. (Figur 3).

Die Wangen sind miteinander durch Abstandhalter verbunden, die ihrem Wesen nach im rechten Winkel zur Mittelachse des entspannten Systems verlaufen und an der Innenseite der Wangen drehbar gelagert sind. Dabei spielt die Ausformung der Abstandhalter keine Rolle, solange sie den auftretenden Kräften standhalten kann. (Figur 4). Die Abstandhalter werden im Folgenden vereinfacht als Sprossen bezeichnet.

Auf ein Achsenkreuz übertragen stellt sich die Strebe folgendermaßen dar: Die Mittelachse der Strebe in Seitenansicht liegt auf der X-Achse bei y = 0. Die Befestigungspunkte liegen bei x = 0 und auf der Y-Achse bei spiegelbildlich gleichen Werten. Die Befestigungspunkte der Sprossen verlaufen dabei parallel zur Y-Achse durch das ganze System. Die Verbindung der beiden Wangen untereinander ist bei y = 0.

Die so beschriebene Strebe ist in der Lage in Y-Richtung einwirkende Impulse so umzuwandeln, daß deren Auftreffen auf den Keil zunächst zu einer kurvenförmigen Verformung führt. Diese lokale Verformung wird durch die systeminternen Sprossen sowohl an die dem Impuls entgegengelegene (-ny) Wange übertragen, als auch auf die dem Impuls zugewandte (+ny) Seite. Die impulsabgewandte Wange übt dabei einen Druck auf die Spitze aus. Dadurch zieht die impulszugewandte Wange infolge des gemeinsamen Befestigungspunktes, der unbeweglich bleibt, an der Verbindung am vorderen Ende bei y = 0.

Ausgehend von einer geradlinigen Ausformung der beiden Wangen bleibt die Spitze erfindungsgemäß auf der X-Achse bei y = 0 trotz der vom Impuls verursachten Verformung. D.h. diese Strebe gleicht die lokale Verformung durch eine Gegenbewegung gleicher Impulsstärke an anderer Stelle aus.

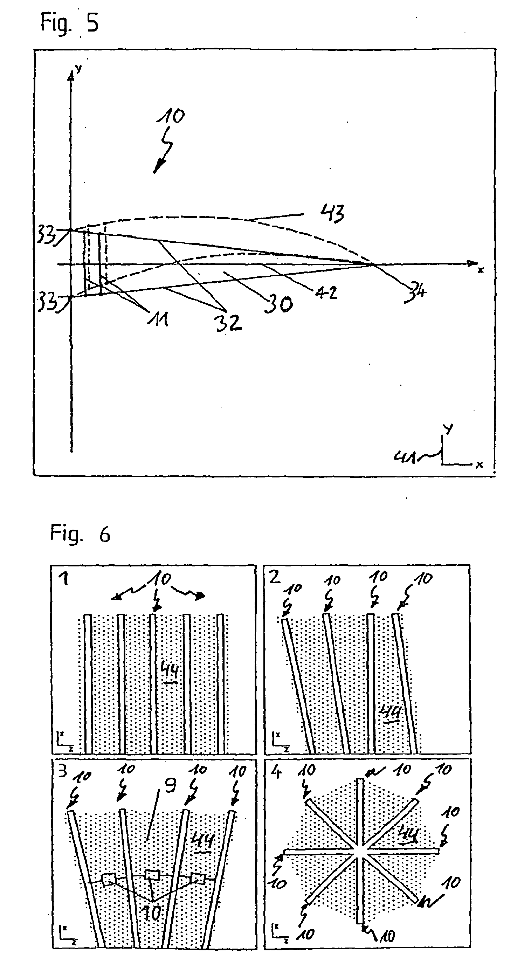

Bei dieser Verformung wird lediglich die Gesamtstrebe in ihrer Gesamtlänge auf der X-Achse um mx verkürzt. Dies gilt jedoch nur bei einer der Sprossenkonstruktion angemessenen Impulsstärke. (Figur 5). Dabei hängt der Energieverlust bei der Strebenverformung von der Elastizität in Orientierung der Bewegung der Wangen, bzw. der drehbaren Befestigung der Sprossen an den Wangen ab.

Die Grenze der Strebenverformung hängt unter anderem vom Abstand der Sprossen und deren Ausformung, bzw der gesamten Konstruktion ab. Sowohl die Wangen als auch die Sprossen müssen dabei zug- und druckstabil ausgebildet sein.

Werden anwendungsgemäß mehrere Streben aneinandergereiht, reagiert jede Strebe jeweils auf den auf sie ausgeübten Druck individuell, sofern nicht das Material der gegebenenfalls gespannten Oberhaut die Impulseinwirkung auf die anderen Streben überträgt und diese mit auslenkt.

Dieses Bauteil weist einen dynamischen Hebel 28 auf, der über eine Achse, die in ihrer Lage veränderbar sein kann. Der Hebel besteht aus einem Segment, das sich nach oben und/oder unten ausdehnt und an wenigstens zwei benachbarten Punkten 29 befestigt ist. Das sich daraus ergebende keilförmige Gebilde (Querstrebe 11) ist am Berührungspunkt 34 an der Spitze des gesamten Systems miteinander verbunden und wird von Distanzhaltern 3 in konstantem Abstand gehalten. Die die Ausdehnung kennzeichnenden gelenkigen Außenwangen 32 sind in Orientierung ihrer Ausdehnung elastisch zug- und druckstabil ausgebildet.

Die Außenwangen 32 verlaufen von ihren Befestigungspunkten 29 geradlinig, gleichlang zu ihrem gemeinsamen Verbindungspunkt 34, wobei sie von ihren Befestigungspunkten 29 verschieden lang zu ihrem gemeinsamen Verbindungspunkt 34 verlaufen können.

Eine beliebige Anzahl von Querstreben 11 sind entweder parallel, verspreizt zueinander oder mit den stumpfen Enden zueinander in einer Linie, bzw. mehrere sternförmig angeordnet. Die jeweils nebeneinander liegenden Querstreben 11 sind mit einer Außenhaut 14 aus flexiblem Überzugsmaterial umhüllt.

Die Seitenansicht einer Querstrebe 11 ist variabel und die Wangen 32, die zueinander keilförmig stehen, sind geradlinig, konkav oder konvex/konkav (S-förmig) ausgebildet. Die Querstreben 11 werden in einem bestimmten Abstand durch dazwischenliegende Verbindungsvorrichtungen 10 gehalten, wobei sie durch zwischenliegende Verbindungsvorrichtungen in variablem Abstand eingestellt werden.

Die Querstreben 11 werden von ihren drehbar gelagerten Befestigungspunkten 29 aus in zwei Dimensionen bewegt; dadurch wird eine zusammengesetzte Bewegung erzeugt.

Die Querstreben 11 können eine flächige Ausdehnung haben, wobei die Wangen 32 von einer Fläche gebildet werden können und die Sprossen dabei zwischen den beiden Flächen punktuell oder als durchlaufende Bänder angeordnet sind. Mindestens drei der keilförmigen Querstreben 11 sind ringförmig um einen Hohlkörper herum derart angeordnet, daß sich dadurch auch eine verjüngende (C)und/ oder erweiternde (B) Rohrform bildet, die in der Lage ist, Strömungen dynamisch umzuleiten.

Die Konstruktion zur Versteifung der Ringform im Verlauf des Systems ist mit federnden oder starren Ringen 12 zur Stabilisierung und Synchronisierung versehen. Die Querstreben 11 sind dabei von einer elastischen Innen- und eventuell einer Außenhaut überzogen.

Mehrere Querstreben 11 können parallel über eine Strecke so nebeneinander gereiht sein, daß sie unabhängig voneinander bewegt werden können und sich daraus eine in sich bewegliche langgestreckte Konstruktion ergibt, mit der eine wellenförmige Bewegung ausgeführt werden kann.

Die beiden die Außenflächen bildenden Außenwangen werden mit Hilfe eines elastischen jedoch druckstabilen Formteiles 13 in konstantem Abstand gehalten, ohne sie dabei in ihrer Verschiebung gegeneinander, bzw zum Kern zu behindern. Der Abstand kann durch eine geleeartige Zwischenfüllung 13 in Verbindung mit einer die Strebe umhüllenden geschlossenen Tasche eingehalten werden. Das System kann dabei mit einem einströmendem Fluid wie Wasser oder Luft gefüllt sein.

Die Profilform wird durch das aus der Bewegung herleitende in das System einzuleitende Medium, Wasser bzw. Luft, gefüllt und erhält dadurch seine Stabilität. Die Sprossen können dabei nur zugstabil ausgebildet sein.

Die Befestigungspunkte 29 sind beide starr mit ihrem kraftgebenden Körper verbunden, wobei nur eine Wange 32 starr befestigt, die andere dagegen in Richtung der Ausdehnung der Querstrebe 11 verschiebbar ist. Beide Wangen 32 können individuell angesteuert werden.

Die Befestigungspunkte 29 der Sprossen liegen im Querschnittsinneren der U-förmig ausgebildeten Außenwange 32. Die Wangen 32 können sich vom kraftgebenden Ende ausgehend zum spitzen Ende hin in ihrem Durchmesser verringern. Auch kann sich eine Wange 32 vom kraftgebenden Ende ausgehend zum spitzen Ende hin in ihrem Durchmesser verändern oder von einer zunächst einsträngigen Wangen ausgehend in zwei oder mehrere Wangenenden auffächern.

Es können Distanzhalter 3 vorgesehen sein, die zug- und druckstabil ausgebildet sind. Die Distanzhalter 3 könne rechtwinklig zur Mittelachse des entspannten Systems verlaufen und an den Innenseiten der Außenwangen 32 drehbar gelagert sein. Dabei kann im Zwischenraum zwischen den Distanzhaltern 3 systemintern diagonal eine Druck- oder Zugbewegung ausgeübt werde.

### Bezugszeichen

- 10: Vorrichtung
- 11, 11a: Streben
- 12, 12a: Außenhaut
- 13: Bohrung
- 14: Hauptachse
- 15: Nase
- 16: Zapfen
- 17: Bolzen
- 18, 18a: flexibeles Befestigungsmittel
- 19: stumpfes Ende
- 20: Gerüst
- 21: Ring
- 22: spitze Ende
- 23: oberes Ende
- 24: unteres Ende
- 25: Hauptdruckrichtung
- 26: Freiraum
- 27: Innenseite
- 28: Hebel
- 29: benachbarte Punkte
- 30: keilförmiges Strebengerüst
- 31: Berührungspunkt
- 32: gelenkige Außenwange
- 33: Befestigungspunkt
- 34: gemeinsamer Verbindungspunkt
- 35: Hubgabel
- 36: zylindrische Werkstücke
- 37: wirksame Länge
- 38: Bewegungsrichtung
- 39: gespannter Zustand
- 40: entspannter Zustand
- 41: Koordinatensystem
- 42: Mittelachse
- 43: Verformung
- 44: Membrane
- 45: Auf- und Abbewegung
- 46: seitwärts gerichtete Bewegung
- 47: Stabilisationsring
- 48: Rohr
- 49: sich verbreiternde Position
- 50: Sich verjüngende Position
- 51: Kernteil
- 52: Luftmoleküle
- 53: Rahmen
- 54: unebene Oberfläche
- 55: Fuß
- 56: Person
- 57: periphere Achswelle
- 58: Schubstange
- 59: Antrieb

## Patentansprüche

1. Bauteil (10) zur Abstützung einer von einem festen Körper ausgeübten Kraft, mit einem Gerüst (20) umfassend zwei flexiblekeilförmig aufeinanderzulaufende Außenwangen (12, 32) und an der Innenseite der Außenwangen anschamierte Streben (11, 11a), die über die Außenwangen miteinander verbunden sind und in gegenseitiger Wirkverbindung stehen, so dass das Gerüst (20) bei einer belasteten Außenwange (12, 32) unter Wirkung der Kraft gegen die Kraftrichtung ausgelenkt ist, wobei die Außenwangen (12, 32) im entspannten Zustand des Bauteils (10) gradlinig konkav oder konvex/konkav (S-förmig) ausgebildet sind.

2. Bauteil nach Anspruch 1, **dadurch gekennzeichnet, dass** ein elastisches Befestigungsmittel (18) vorgesehen ist, durch das die Streben (11, 11a) mit der Außenwange (12, 32) verbunden sind.

3. Bauteil nach Anspruch 1 oder 2, **dadurch gekennzeichnet, dass** Streben (11, 11a) nur zugstabil ausgestaltet sind.

4. Bauteil nach einem der oben genannten Ansprüche, **dadurch gekennzeichnet, dass** die Streben (11, 11a) an den Außenwangen (12, 32) in Befestigungspunkten (29) gelenkig gelagert sind.

5. Bauteil nach einem der oben genannten Ansprüche, **dadurch gekennzeichnet, dass** Streben (11, 11a) druck- und zugstabil ausgestaltet sind.

6. Bauteil nach einem der oben genannten Ansprüche, **dadurch gekennzeichnet, dass** die Außenwangen (12, 32) fluidgefüllt ausgestaltet sind.

7. Bauteil nach Anspruch 6, **dadurch gekennzeichnet, dass** das Fluid ein Gel ist.

8. Bauteil nach einem der oben genannten Ansprüche, **dadurch gekennzeichnet, dass** ein Hebel (28) vorgesehen ist, durch den die Form der Außenwange (12, 32) verstellbar ist.

9. Bauteil nach einem der oben genannten Ansprüche, **dadurch gekennzeichnet, dass** zwischen den Streben (11, 11a) Verbindungsvorrichtungen (10) vorgesehen sind, durch die der Abstand der Streben (11, 11a) variabel ist.

10. Bauteil nach einem der oben genannten Ansprüche, **dadurch gekennzeichnet, dass** die Enden der Streben (11, 11a) unter der Kraftwirkung gegeneinander verschiebbar und eine Druck- und/oder Zugspannung auf die Außenwange (12, 32) ausübend ausgestaltet sind.

11. Bauteil nach einem der oben genannten Ansprüche, **dadurch gekennzeichnet, dass** die Außenwangen (12, 32) S-förmig ausgestaltet sind.

12. Bauteil nach einem der oben genannten Ansprüche, **dadurch gekennzeichnet, dass** das Gerüst (20) als Stuhllehne zum Abstützen einer Person (56) ausgestaltet ist.

13. Bauteil nach einem der oben genannten Ansprüche, **dadurch gekennzeichnet, dass** das Gerüst (20) als Sitzfläche zum Abstützen einer Person (56) ausgestaltet ist.

14. Bauteil nach Anspruch 12 und 13, **dadurch gekennzeichnet, dass** die Gerüste (20) von Sitzfläche und Stuhllehne miteinander verbunden sind.

15. Bauteil nach Anspruch 14, **dadurch gekennzeichnet, dass** die Gerüste (20) über eine gemeinsame Achswelle miteinander verbunden sind.

16. Stuhllehne nach Anspruch 12, **dadurch gekennzeichnet, dass** das spitze Ende des Gerüsts (20) nach oben weist.

17. Verwendung eines Bauteils (10) gemäß einem der Ansprüche 1 bis 16 zur Abstützung einer von einem festen Körper ausgeübten Kraft.

## Claims

1. Component (10) for supporting a force exerted by a solid body, with a frame (20) comprising two flexible, outer side pieces (12, 32) extending towards one another in a wedge-shaped manner and struts (11, 11a) hinge-mounted on the internal face of the outer side pieces which struts (11, 11a) are connected to one another via the outer side pieces and are in a mutually interacting connection so that when an outer side piece (12, 32) is subjected to load, the frame (20), under the effect of the force, is deflected opposite the direction of the force, and the outer side pieces (12, 32) are of a straight, concave or convex/concave (S-shaped) form when the component (10) is in the relaxed state.

2. Component as claimed in claim 1, **characterised in that** an elastic fixing means (18) is provided, by means of which the struts (11, 11a) are connected to the outer side piece (12, 32).

3. Component as claimed in claim 1 or 2, **characterised in that** struts (11, 11a) are designed to withstand tension only.

4. Component as claimed in one of the preceding claims, **characterised in that** the struts (11, 11a) are flexibly support on the outer side pieces (12, 32) at fixing points (29).

5. Component as claimed in one of the preceding claims, **characterised in that** struts (11, 11a) are designed to withstand pressure and tension.

6. Component as claimed in one of the preceding claims, **characterised in that** the outer side pieces (12, 32) are designed filled with a fluid.

7. Component as claimed in claim 6, **characterised in that** the fluid is a gel.

8. Component as claimed in one of the preceding claims, **characterised in that** a lever (28) is provided, by means of which the shape of the outer side piece (12, 32) can be adjusted.

9. Component as claimed in one of the preceding claims, **characterised in that** connecting mechanisms (10) are provided between the struts (11, 11a), by means of which the spacing of the struts (11, 11a) can be varied.

10. Component as claimed in one of the preceding claims, **characterised in that** the ends of the struts (11, 11a) are displaceable with respect to each other under the effect of the force and are designed to transmit pressure and/or tension to the outer side piece (12, 32).

11. Component as claimed in one of the preceding claims, **characterised in that** the outer side pieces (12, 32) are of an S-shaped design.

12. Component as claimed in one of the preceding claims, **characterised in that** the frame (20) is designed as a chair back for supporting a person (56).

13. Component as claimed in one of the preceding claims, **characterised in that** the frame (20) is designed as a seating surface for supporting a person (56).

14. Component as claimed in claim 12 and 13, **characterised in that** the frames (20) of the seating surface and chair back are connected to one another.

15. Component as claimed in claim 14, **characterised in that** the frames (20) are connected to one another by means of a common shaft.

16. Chair back as claimed in claim 12, **characterised in that** the pointed end of the frame (20) is directed upwards.

17. Use of a component (10) as claimed in one of claims 1 to 16 for supporting a force exerted by a solid body.

## Revendications

1. Elément (10) pour supporter une force exercée par un corps solide, avec une ossature (20) comprenant deux faces extérieures flexibles (12, 32) qui se dirigent l'une vers l'autre en forme de coin, et des entretoises (11, 11a) qui sont articulées sur le côté intérieur des faces extérieures, qui sont reliées entre elles par lesdites faces extérieures et qui sont en relation fonctionnelle entre elles, de sorte que l'ossature (20), lorsqu'une face extérieure (12, 32) est contrainte, est déviée, sous l'action de la force, à l'opposé du sens de ladite force, étant précisé que les faces extérieures (12, 32), dans la position détendue de l'élément (10), sont droites, concaves ou convexes/concaves (en S).

2. Elément selon la revendication 1, **caractérisé en ce qu'**il est prévu un moyen de fixation élastique (18) grâce auquel les entretoises (11, 11a) sont reliées à la face extérieure (12, 32).

3. Elément selon la revendication 1 ou 2, **caractérisé en ce que** les entretoises (11, 11a) sont conçues pour être stables à la traction seulement.

4. Elément selon l'une des revendications précédentes, **caractérisé en ce que** les entretoises (11, 11a) sont montées de manière articulée sur les faces extérieures (12, 32) dans des points de fixation (29).

5. Elément selon l'une des revendications précédentes, **caractérisé en ce que** les entretoises (11, 11a) sont conçues pour être stables à la pression et à la traction.

6. Elément selon l'une des revendications précédentes, **caractérisé en ce que** les faces extérieures (12, 32) sont conçues pour être remplies de fluide.

7. Elément selon la revendication 6, **caractérisé en ce que** le fluide consiste en un gel.

8. Elément selon l'une des revendications précédentes, **caractérisé en ce qu'**il est prévu un levier (28) grâce auquel la forme de la face extérieure (12, 32) est réglable.

9. Elément selon l'une des revendications précédentes, **caractérisé en ce qu'**il est prévu entre les entretoises (11, 11a) des dispositifs de liaison (10) grâce auxquels l'écartement des entretoises (11, 11a) est variable.

10. Elément selon l'une des revendications précédentes, **caractérisé en ce que** les extrémités des entretoises (11, 11a) sont aptes à coulisser l'une par rapport à l'autre sous l'action d'une force et sont conçues pour exercer une contrainte de pression et/ou de traction sur la face extérieure (12, 32).

11. Elément selon l'une des revendications précédentes, **caractérisé en ce que** les faces extérieures (12, 32) ont une forme en S.

12. Elément selon l'une des revendications précédentes, **caractérisé en ce que** l'ossature (20) est conçue comme un dossier de siège pour supporter une personne (56).

13. Elément selon l'une des revendications précédentes, **caractérisé en ce que** l'ossature (20) est conçue comme une surface d'assise pour supporter une personne (56).

14. Elément selon la revendication 12 ou 13, **caractérisé en ce que** les ossatures (20) de la surface d'assise et du dossier sont reliées entre elles.

15. Elément selon la revendication 14, **caractérisé en ce que** les ossatures (20) sont reliées entre elles par un axe commun.

16. Dossier de siège selon la revendication 12, **caractérisé en ce que** l'extrémité pointue de l'ossature (20) est dirigée vers le haut.

17. Utilisation d'un élément (10) selon l'une des revendications 1 à 16 pour supporter une force exercée par un corps solide.
